# EUROPÄISCHE PATENTSCHRIFT

(11) **EP 2 812 990 B1**
(45) Veröffentlichungstag und Bekanntmachung des Hinweises auf die Patenterteilung: **16.12.2020**
(21) Anmeldenummer: 13712665.2
(22) Anmeldetag: 05.02.2013
(51) Int. Cl.: H02M 7/487, H02M 7/219

(54) **AC/DC-SPANNUNGSWANDLER UND BETRIEBSVERFAHREN HIERFÜR**
AC/DC VOLTAGE TRANSFORMER AND METHOD OF OPERATION THEREFOR
CONVERTISSEUR DE TENSION CA/CC ET PROCÉDÉ DE FONCTIONNEMENT CORRESPONDANT

(30) Priorität: 06.02.2012 AT 1562012
(43) Veröffentlichungstag der Anmeldung: 17.12.2014
(73) Patentinhaber: FRONIUS INTERNATIONAL GmbH, 4643 Pettenbach (AT)
(72) Erfinder: ACHLEITNER, Günter, A-4642 Sattledt (AT); TRAUNER, Gernot, A-4611 Buchkirchen (AT); PAMER, Andreas, A-4702 Wallern (AT)
(74) Vertreter: Burger, Hannes
(86) Internationale Anmeldenummer: PCT/AT2013/050029
(87) Internationale Veröffentlichungsnummer: WO 2013/116885

(56) Entgegenhaltungen:
- EP-A1- 0 642 212
- WO-A1-2011/048457
- US-B1- 6 480 403
- US-B1- 6 842 354

## Beschreibung

Die Erfindung betrifft ein Verfahren zur Ansteuerung eines AC/DC-Spannungswandlers, welcher einen Gleichspannungsausgang aufweist, zwischen dem wenigstens eine Serienschaltung von zumindest zwei Kondensatoren und wenigstens eine Serienschaltung von n Schaltelementen angeordnet ist, wobei n ≥ 4 gilt. Ein Verbindungspunkt der Schaltelemente zwischen jeweils n/2 Schaltelementen ist mit einem Anschluss eines Wechselspannungseingangs verbunden. Zudem ist zumindest der Serienschaltung der dem genannten Verbindungspunkt nächst liegenden zwei Schaltelemente eine Serienschaltung von zumindest zwei Dioden antiparallel geschaltet. Schließlich ist ein Verbindungspunkt der Kondensatoren mit einem Verbindungspunkt der Dioden verbunden. Weiterhin werden ein Regler zur Umsetzung des Verfahrens und ein AC/DC-Spannungswandler beinhaltend einen solchen Regler angegeben.

AC/DC-Spannungswandler sind prinzipiell bekannt und werden überall dort eingesetzt, wo eine Wechselspannung in eine Gleichspannung gewandelt werden soll, beispielsweise für Ladeschaltungen von Akkumulatoren oder zur Versorgung des Zwischenkreises eines Wechselrichters. Ein AC/DC-Spannungswandler kann somit auch Teil eines AC/AC-Wandlers sein. Des Weiteren können AC/DC-Spannungswandler häufig bidirektional betrieben werden, sodass sie auch als DC/AC-Spannungswandler fungieren können.

Aus den Patentdokumenten US 6,842,354 B1 und EP 0 642 212 A1 sind darüber hinaus dreistufige Stromrichter mit den Merkmalen der Oberbegriffe der unabhängigen Ansprüche bekannt.

Nachteilig an den bekannten AC/DC-Spannungswandlern beziehungsweise Regelungsverfahren hierfür ist, dass damit die zahlreichen Anforderungen an diese Geräte wie Konstanthalten der Ausgangsspannung bei variierendem Energiefluss, Regelung des Summenstroms der am Wechselspannungseingang angeschlossenen Phasen, Regelung einer beliebigen Phase zwischen Eingangsstrom und Eingangsspannung sowie eine möglichst rippelarmer, sinusförmiger Eingangsstrom nur unzureichend erfüllt werden.

Aufgabe der Erfindung ist es daher, ein verbessertes Verfahren zur Ansteuerung eines AC/DC-Spannungswandlers, eine verbesserte Regelung für einen AC/DC-Spannungswandler sowie einen verbesserten AC/DC-Spannungswandler anzugeben. Insbesondere soll das Konstanthalten der Ausgangsspannung bei variierendem Energiefluss, die Regelung des Summenstroms der am Wechselspannungseingang angeschlossenen Phasen, die Regelung einer beliebigen Phase zwischen Eingangsstrom und Eingangsspannung verbessert sowie ein möglichst rippelarmer, sinusförmiger Eingangsstrom erreicht werden.

Die Aufgabe der Erfindung wird mit einem Verfahren der eingangs genannten Art gelöst, bei dem
- eine Ausgangsspannung am Gleichspannungsausgang und ein Potential des genannten Verbindungspunktes der Kondensatoren beziehungsweise der Dioden als Regelgrößen,
- ein Eingangsstrom am Wechselspannungseingang als Stellgröße und
- die Schaltelemente als Stellglied eines Regelkreises vorgesehen sind. Alternativ kann die Erfindung auch darin gesehen werden, dass
- eine Ausgangsspannung am Gleichspannungsausgang und eine Summe der über die Anschlüsse eines Wechselspannungseingangs geführten Ströme als Regelgrößen,
- ein Eingangsstrom am Wechselspannungseingang als Stellgröße und
- die Schaltelemente als Stellglied eines Regelkreises vorgesehen sind.

Die Begründung dafür ist darin zu sehen, dass das Potential des genannten Verbindungspunktes unmittelbar mit der Summe der Eingangsströme zusammenhängt.

Die Aufgabe der Erfindung wird weiterhin mit einer Regelung für einen AC/DC-Spannungswandler gelöst, welcher einen Gleichspannungsausgang umfasst, zwischen dem wenigstens eine Serienschaltung von zumindest zwei Kondensatoren und wenigstens eine Serienschaltung von n Schaltelementen angeordnet ist, wobei n ≥ 4 gilt wobei ein Verbindungspunkt der Schaltelemente zwischen n/2 Schaltelementen mit einem Anschluss eines Wechselspannungseingangs verbunden ist, wobei zumindest der Serienschaltung der dem genannten Verbindungspunkt nächst liegenden zwei Schaltelemente eine Serienschaltung von zumindest zwei Dioden antiparallel geschaltet ist und wobei ein Verbindungspunkt der Kondensatoren mit einem Verbindungspunkt der Dioden verbunden ist,

### bei der

- ein Eingang für die Ausgangsspannung am Gleichspannungsausgang und ein Potential des genannten Verbindungspunktes der Kondensatoren beziehungsweise der Dioden,
- Ausgänge zur Ansteuerung der Schaltelemente und
- Mittel zur Ausführung eines Regelalgorithmus, bei dem die die Ausgangsspannung und das genannte Potential als Regelgrößen, ein Eingangsstrom am Wechselspannungseingang als Stellgröße und die Schaltelemente als Stellglied eines Regelkreises vorgesehen sind.

Schließlich wird die Erfindung auch durch einen AC/DC-Spannungswandler gelöst, welcher einen Gleichspannungsausgang umfasst, zwischen dem wenigstens eine Serienschaltung von zumindest zwei Kondensatoren und wenigstens eine Serienschaltung von n Schaltelementen angeordnet ist, wobei n ≥ 4 gilt, wobei ein Verbindungspunkt der Schaltelemente zwischen n/2 Schaltelementen mit einem Anschluss eines Wechselspannungseingangs verbunden ist, wobei zumindest der Serienschaltung der dem genannten Verbindungspunkt nächst liegenden zwei Schaltelemente eine Serienschaltung von zumindest zwei Dioden antiparallel geschaltet ist und wobei ein Verbindungspunkt der Kondensatoren mit einem Verbindungspunkt der Dioden verbunden ist,
und mit dem
eine erfindungsgemäße Regelung,
- deren Eingang für die Ausgangsspannung am Gleichspannungsausgang mit eben diesem Gleichspannungsausgang,
- deren Eingang für das Potential des genannten Verbindungspunktes der Kondensatoren beziehungsweise der Dioden mit eben diesem Verbindungspunkt und
- deren Ausgänge zur Ansteuerung der Schaltelemente mit eben diesen Schaltelementen verbunden ist.

Auch bei der erfindungsgemäßen Regelung und dem erfindungsgemäßen AC/DC-Spannungswandler kann anstelle des Potentials des genannten Verbindungspunktes der Kondensatoren eine Summe der über die Anschlüsse eines Wechselspannungseingangs geführten Ströme als Regelgröße herangezogen werden.

Erfindungsgemäß kann auf diese Weise einerseits eine Ausgangsspannung bei variierendem Energiefluss konstant gehalten oder einem Sollwert nachgeführt werden, andererseits kann auch der Summenstroms der am Wechselspannungseingang angeschlossenen Phasen beliebig vorgegeben werden. Insbesondere kann dieser auf den Wert Null geregelt werden, sodass der erfindungsgemäße AC/DC-Spannungswandler auch an Drehstromnetzen ohne Nullleiter angeschlossen werden kann. Des Weiteren wird ein rippelarmer, sinusförmiger Eingangsstrom erreicht.

Darüber hinaus wird durch die Serienschaltung der Schaltelemente die Spannung über den einzelnen Schaltelementen reduziert, sodass auch bei relativ hoher Ausgangsspannung des AC/DC-Spannungswandlers, Schaltelemente mit relativ niedriger Sperrspannung eingesetzt werden können.

Vorteilhafte Ausgestaltungen und Weiterbildungen der Erfindung ergeben sich aus den Unteransprüchen sowie aus der Beschreibung in Zusammenschau mit den Figuren.

Günstig ist es, wenn die Form des Eingangsstroms vorgegeben wird. Beispielsweise kann eine Sinusform mit einer bestimmten Frequenz, beispielsweise 50Hz oder 60Hz, vorgeben werden. Auf diese Weise kann der erfindungsgemäße AC/DC-Spannungswandler auch sehr gut als PFC eingesetzt werden. Selbstverständlich kann aber auch jede andere gewünschte Form vorgegeben werden.

Günstig ist es weiterhin, wenn die Ausgangsspannung am Gleichspannungsausgang mithilfe einer Amplitude des Eingangsstroms vorgegebener Form geregelt wird. Die Regelung kann auf diese Weise vereinfacht werden, da lediglich die Höhe einer zum Beispiel vorgegebenen Sinusform variiert wird.

Vorteilhaft ist es zudem, wenn das Potential des genannten Verbindungspunktes der Kondensatoren beziehungsweise der Dioden mithilfe der Amplitude des Eingangsstroms vorgegebener Form geregelt wird. Analog zu dem zuvor Gesagten kann auch hier die Regelung auf sehr einfache Weise erfolgen, indem beispielsweise eine Halbwelle des Eingangsstroms angehoben wird, um das Potential in die gewünschte Richtung zu verschieben. Bei dieser Variante wird kein oder kein nennenswerter Rippel am Eingangsstrom erzeugt, sodass diese Variante des erfindungsgemäßen AC/DC-Spannungswandlers sehr gut als PFC eingesetzt werden kann.

Besonders vorteilhaft ist es auch, wenn das Potential des genannten Verbindungspunktes der Kondensatoren beziehungsweise der Dioden mithilfe eines Impulses geregelt wird, welcher dem Eingangsstroms vorgegebener Form überlagert wird. Diese Art der Regelung ist sehr schnell, da unmittelbar wenn eine Verschiebung des Potentials vorliegt ein entsprechender Impuls überlagert werden kann, um das Potential in die gewünschte Richtung zu verschieben. Die Korrektur des Potentials kann daher in aller Regel deutlich schneller erfolgen, als eine Halbwelle dauert.

Vorteilhaft ist es, wenn eine Phasenverschiebung zwischen einem Eingangsstrom und einer Eingangsspannung vorgegeben wird. Auf diese Weise kann der erfindungsgemäße AC/DC-Spannungswandler als Phasenschieber eingesetzt werden, sodass induktive Last in einem Stromnetz, beispielsweise elektrische Maschinen in einer Fabrikhalle, kompensiert werden kann. Sollen kapazitive Lasten kompensiert werden, so ist der Phasenwinkel so zu wählen, dass der AC/DC-Spannungswandler induktives Verhalten zeigt.

Vorteilhaft ist es, wenn wenigstens zwei Schaltelemente, welcher auf einer Seite des Verbindungspunktes der Schaltelemente liegen, unterschiedlich angesteuert werden. Dabei macht man sich den Umstand zu Nutze, dass in Serie liegende Schaltelemente eine logische UND-Verknüpfung verwirklichen. Das resultierende Schaltsignal ist also das Ergebnis der UNDverknüpften Einzelsignale.

Vorteilhaft ist es in diesem Zusammenhang, wenn wenigstens eines der auf einer Seite des genannten Verbindungspunktes liegende Schaltelemente mit einem Taktsignal angesteuert wird, welches dieselbe Frequenz aufweist wie eine Eingangsspannung am Wechselspannungseingang. Bei dieser Variante der Erfindung werden die Schaltsignale der übrigen in Serie liegenden Schaltelemente jeweils für eine Halbperiode ausgeblendet. Die Ansteuerung der Schaltelemente kann somit vereinfacht werden.

Vorteilhaft ist es dabei, wenn wenigstens eines der auf der anderen Seite des genannten Verbindungspunktes liegende Schaltelemente mit einem zum genannten Taktsignal inversen Signal angesteuert wird. Auf diese Weise werden die Zweige einer Halbbrücke gegengleich angesteuert.

Vorteilhaft ist es, wenn wenigstens eines der Schaltelemente, welches nicht mit dem Taktsignal oder dem dazu inversen Signal angesteuert wird, mit einem pulsweitenmodulierten Signal angesteuert wird. Auf diese Weise kann ein- und dasselbe Signal zur Ansteuerung beider Zweige einer Halbbrücke verwendet werden.

Günstig ist es, wenn der Verbindungspunkt der Kondensatoren beziehungsweise der Dioden mit einem Nullleiteranschluss des Wechselspannungseingangs verbunden ist. Auf diese Weise kann ein beliebiger Summenstrom der Phasen erzeugt und über den Nullleiter geleitet werden.

Günstig ist es, der Verbindungspunkt der Schaltelemente mit einem Phasenanschluss des Wechselspannungseingangs verbunden ist. Auf diese Weise kann der AC/DC-Spannungswandler mit einem Wechselstromnetz beziehungsweise Drehstromnetz verbunden werden.

Besonders vorteilhaft ist es, wenn die Schaltelemente durch MOSFETs und die Dioden durch deren Body-Dioden gebildet sind. Durch diese Maßnahme kann das Vorsehen gesonderter Dioden unterbleiben, wodurch sich ein vereinfachter Schaltungsaufbau ergibt.

Zum besseren Verständnis der Erfindung wird diese anhand der nachfolgenden Figuren näher erläutert.

Es zeigen jeweils in stark schematisch vereinfachter Darstellung:
- Fig. 1: eine erste schematisch dargestellte Variante eines erfindungsgemäßen AC/DC-Spannungswandlers;
- Fig. 2: den Stromfluss durch den AC/DC-Spannungswandler aus Fig. 1 während einer ersten Phase;
- Fig. 3: den Stromfluss durch den AC/DC-Spannungswandler aus Fig. 1 während einer zweiten Phase;
- Fig. 4: ein Beispiel für die Vorgabe der Form eines Eingangsstroms;
- Fig. 5: ein Beispiel für die Veränderung der Amplitude eines hinsichtlich der Form vorgegebenen Eingangsstroms zur Regelung der Ausgangsspannung;
- Fig. 6: ein Beispiel für die Veränderung der Amplitude eines hinsichtlich der Form vorgegebenen Eingangsstroms zur Regelung des Potentials des Verbindungspunktes der Kondensatoren am Ausgang des AC/DC-Spannungswandlers;
- Fig. 7: ein Beispiel für die Überlagerung eines hinsichtlich der Form vorgegebenen Eingangsstroms mit einem Impuls zur Regelung des genannten Potentials;
- Fig. 8: ein Beispiel für die Vorgabe einer Phasenverschiebung zwischen Eingangsstrom und Eingangsspannung;
- Fig. 9: den AC/DC-Spannungswandler aus Fig. 1 mit einer zusätzlichen Einrichtung zur Messung der Eingangsspannung;
- Fig. 10: eine Variante des erfindungsgemäßen AC/DC-Spannungswandlers zum Anschluss an ein Drehstromnetz;
- Fig. 11: ein beispielhaftes Zeigerdiagramm der Eingangsströme und Eingangsspannungen;
- Fig. 12: eine Variante des erfindungsgemäßen AC/DC-Spannungswandlers mit mehr als zwei Schaltelementen je Halbbrücke während einer ersten Phase;
- Fig. 13: den erfindungsgemäßen AC/DC-Spannungswandler aus Fig. 12 während einerzweiten Phase;
- Fig. 14: eine Variante des erfindungsgemäßen AC/DC-Spannungswandlers, bei dem alle Dioden durch Transistoren ersetzt wurden;
- Fig. 15: ein Blockschaltbild einer Variante der erfindungsgemäßen Regelung;
- Fig. 16: den zeitlichen Verlauf ausgewählter Ströme an einem erfindungsgemäßen AC/DC-Spannungswandler;
- Fig. 17: den zeitlichen Verlauf ausgewählter Spannungen an einem erfindungsgemäßen AC/DC-Spannungswandler;
- Fig. 18: ein vorteilhafte Schaltungsvariante zur Ansteuerung einer Halbbrücke mit mehr als zwei Schaltelementen und
- Fig. 19: den zeitlichen Verlauf der Schaltsignale für die Transistoren entsprechend der Schaltungsvariante aus Fig. 18.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können.

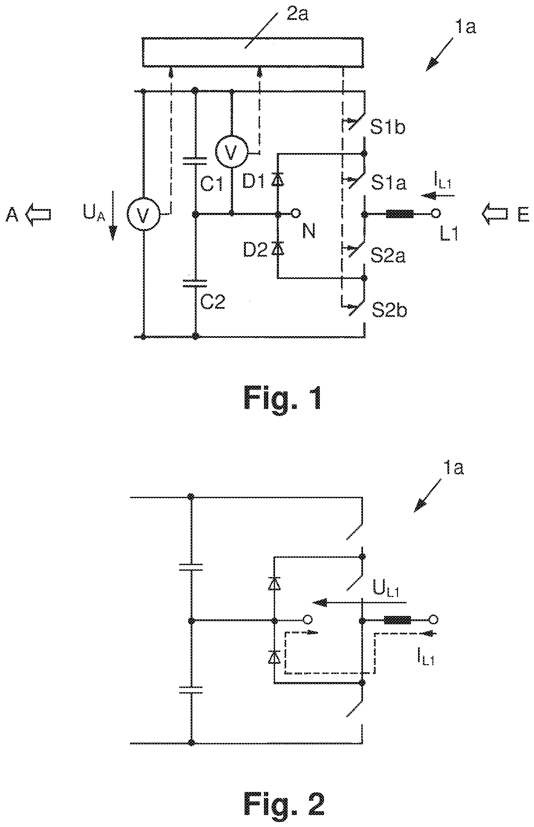

Fig. 1 zeigt einen AC/DC-Spannungswandler la mit einem Gleichspannungsausgang A, zwischen dem eine Serienschaltung zweier Kondensatoren C1, C2, und eine Serienschaltung von vier Schaltelementen S1a, S1b, S2a und S2b angeordnet ist. Der Verbindungspunkt der Schaltelemente S1a, S2a ist mit einem Anschluss, konkret mit einem Phasenanschluss L1, eines Wechselspannungseingangs E verbunden. Der Serienschaltung der dem genannten Verbindungspunkt nächst liegenden zwei Schaltelemente (hier S1a und S2a) ist eine Serienschaltung von zwei Dioden D1, D2 antiparallel geschaltet. Darüber hinaus ist ein Verbindungspunkt der Kondensatoren C1, C2 mit einem Verbindungspunkt der Dioden D1, D2 verbunden. Weiterhin ist der Verbindungspunkt der Kondensatoren C1, C2 beziehungsweise der Dioden D1, D2 mit einem Nullleiteranschluss N des Wechselspannungseingangs E verbunden. Am Wechselspannungseingang E befindet sich darüber hinaus eine nicht näher bezeichnete Induktivität, die Bestandteil des AC/DC-Spannungswandlers 1a, oder aber auch außerhalb davon angeordnet sein kann. Der Gleichspannungsausgang A kann beispielsweise mit einem Zwischenkreis eines Inverters, insbesondere mit dem Zwischenkreis eines Schweiß-Inverters, verbunden sein.

Erfindungsgemäß umfasst die Anordnung eine Regelung 2a mit Eingängen für die Ausgangsspannung U_{A} am Gleichspannungsausgang A und ein Potential des genannten Verbindungspunktes der Kondensatoren C1, C2 beziehungsweise der Dioden D1, D2. Weiterhin umfasst die Regelung 2a Ausgänge zur Ansteuerung der Schaltelemente S1a.. S2b. Schließlich umfasst die Regelung 2a Mittel zur Ausführung eines Regelalgorithmus, bei dem die die Ausgangsspannung U_{A} und das genannte Potential als Regelgrößen, ein Eingangsstrom I_{L1} am Wechselspannungseingang E als Stellgröße und die Schaltelemente S1a..S2b als Stellglied eines Regelkreises vorgesehen sind. In der Fig. 1 sind zu diesem Zweck Spannungsmessmodule V mit strichlierten Messleitungen und strichlierte Steuerleitungen für die Schaltelemente Sla..S2b vorgesehen.

Fig. 2 zeigt den AC/DC-Spannungswandler 1a aus Fig. 1 nun zu einem ersten Zeitpunkt, zu dem die Eingangsspannung U_{L1} positiv ist und die Schaltelemente S1a, S1b und S2b offen und das Schaltelement S2a geschlossen ist. Der Strom I_{L1} fließt daher über den strichliert eingezeichneten Pfad. Während dieser ersten Phase wird die Induktivität aufgeladen. (Anmerkung: Der besseren Übersicht halber wurde die Regelung 2a in der Fig. 2 weggelassen).

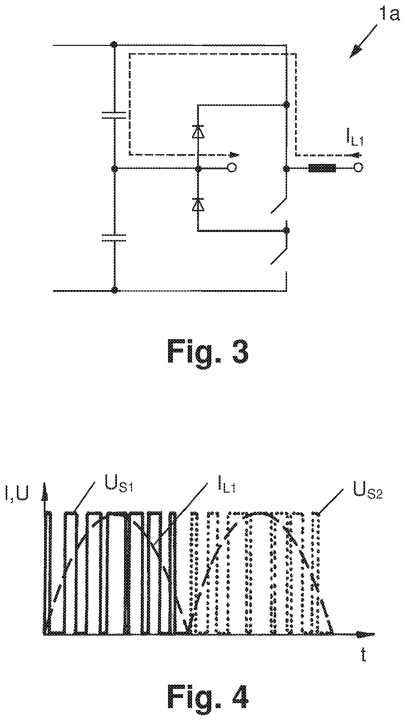

Fig. 3 zeigt den AC/DC-Spannungswandler 1a aus Fig. 1 nun zu einem zweiten Zeitpunkt, zu dem die Eingangsspannung U_{L1} wiederum positiv ist, die Schaltelemente S1a und S1b jedoch geschlossen und die Schaltelemente S2a und S2b offen sind. Der Strom I_{L1} fließt während dieser zweiten Phase über den strichliert eingezeichneten Pfad und lädt den Kondensator C1 auf.

Die Phasen zur Ladung des Kondensators C2 während die Eingangsspannung U_{L1} negativ ist, laufen analog ab und sind daher nicht weiter dargestellt.

Den Schaltelementen S1a..S2b sind in der dargestellten Topologie Freilaufdioden (nicht dargestellt) parallel geschaltet, durch die der Strom I_{L1} während der zweiten Phase auch bei offenem Schaltelementen Sla..S2b fließen kann, wie später noch ausführlich dargestellt werden wird.

In Fig. 4 ist anhand eines Spannungs-/Zeitdiagramms U über t beziehungsweise eines Strom-/Zeitdiagramms I über t dargestellt, wie ein Eingangsstrom I_{L1} vorgegeben werden kann. Dazu werden die Schaltelemente S1a und S1b mit dem Spannungssignal U_{S1} angesteuert (beispielsweise kann es sich bei den Schaltelementen S1a..S2b um Feldeffekttransistoren handeln, wie später noch gezeigt werden wird). Weiterhin wird für das Beispiel angenommen dass das Schaltelement S2a in den Pausen der Schaltelemente S1a, S1b aktiv ist und umgekehrt. Der Schalter S2b bleibt offen. Damit ergeben sich abwechselnd die in den Figuren 2 und 3 dargestellten Zustände. Bei negativer Eingangsspannung U_{L1} kehren sich die Verhältnisse entsprechen um (siehe punktierte Linie). Die Spannungssignale U_{S1} und U_{S2} sind pulsweitenmodulierte Sinussignale sodass sich bei relativ hoher Schaltfrequenz und durch die Tiefpasswirkung der Induktivität am Anschluss L1 der strichliert dargestellte Eingangsstrom I_{L1} konkret ein sinusförmiger Eingangsstrom I_{L1} ergibt. (Anmerkung: in der Fig. 4 und den Figuren 5 bis 8 ist die zweite Halbwelle des Eingangsstroms I_{L1} jeweils hochgeklappt dargestellt. In der Realität wechselt der Eingangsstrom I_{L1} in der zweiten Halbwelle jedoch sein Vorzeichen). Durch entsprechende Ansteuerung der Schaltelemente S1a..S2b kann also eine beliebige Form des Eingangsstroms I_{L1} erzeugt werden. Vorzugsweise wird dabei ein sinusförmiger Wechselstrom mit 50Hz (Europa) beziehungsweise 60 Hz (USA) erzeugt.

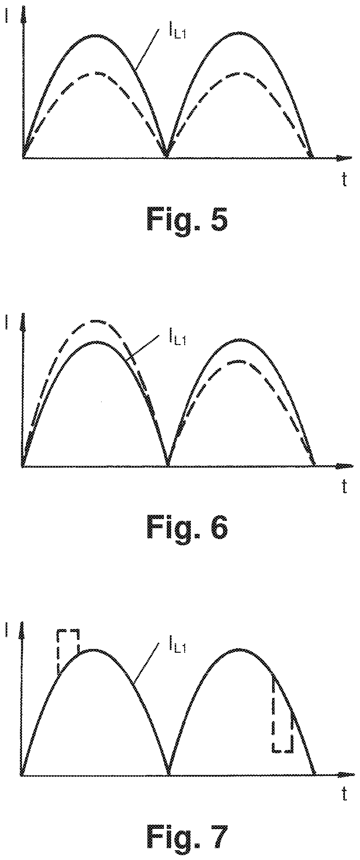

Fig. 5 zeigt nun, wie die Ausgangsspannung U_{A} am Gleichspannungsausgang A mithilfe der Amplitude des Eingangsstroms I_{L1} vorgegebener Form geregelt wird. Die durchgezogene Linie zeigt dabei einen Zustand erhöhten Energiebedarfs am Gleichspannungsausgang A, die strichlierte Linie einen Zustand geringeren Energiebedarfs, wobei zu beachten ist dass die negativen Stromhalbwellen entsprechend bereits gleichgerichtet für die DC Seite dargestellt sind und auf der Netzseite einer gewöhnlichen Sinusform entsprechen. Dies ist auch für die nachfolgenden Diagramme gültig. Die Ausgangsspannung U_{A} wird dabei vorzugsweise konstant gehalten. Je nach Anwendungsfall kann aber natürlich auch eine veränderliche Ausgangsspannung U_{A} vorgegeben werden, die entsprechend geregelt wird.

Fig. 6 zeigt nun, wie das Potential des genannten Verbindungspunktes der Kondensatoren C1, C2 beziehungsweise der Dioden D1, D2 mithilfe der Amplitude des Eingangsstroms I_{L1} vorgegebener Form geregelt wird. Die durchgezogene Linie gibt dabei einen Zustand an, bei dem das erwünschte Potential erreicht und daher nicht aktiv eingestellt werden muss. Die beiden Halbwellen sind daher gleich groß. Die strichlierte Linie gibt dagegen einen Zustand an, bei dem das genannte Potential etwas zu hoch ist. Die positive Halbwelle wird daher etwas vergrößert, die negative Halbwelle verkleinert. Dies führt wie in den Figuren 2 und 3 leicht ersichtlich ist nun dazu, dass der Kondensator C1 etwas mehr geladen wird als der Kondensator C2. Das Potential des genannten Verbindungspunktes wird daher nach unten verschoben. Für das erfindungsgemäße Verfahren werden nicht zwingend beide Halbwellen beeinflusst. Denkbar wäre natürlich auch, dass nur die erste Halbwelle angehoben oder nur die zweite Halbwelle abgesenkt wird.

Fig. 7 zeigt ein alternatives Verfahren bei dem das Potential des genannten Verbindungspunktes der Kondensatoren C1, C2 beziehungsweise der Dioden D1, D2 mithilfe eines Impulses geregelt wird, welcher dem Eingangsstroms I_{L1} vorgegebener Form überlagert wird. Die durchgezogene Linie gibt wiederum den Zustand an, bei dem das erwünschte Potential erreicht und daher nicht aktiv eingestellt werden muss. Die beiden Halbwellen sind daher gleich groß. Die strichlierte Linie gibt dagegen einen Zustand an, bei dem das genannte Potential etwas zu hoch ist. Die dem Kondensator C1 während der positiven Halbwelle zugeführte Energie wird daher mit einem positivem Impuls etwas vergrößert, die dem Kondensator C2 während der negativen Halbwelle zugeführte Energie wird daher mit einem negativen Impuls etwas verkleinert. Denkbar ist natürlich wiederum, dass ein Impuls nur während der ersten Halbwelle oder nur während der zweiten Halbwelle überlagert wird.

Erfindungsgemäß können also sowohl die Ausgangsspannung U_{A} am Gleichspannungsausgang A als auch das Potential des Verbindungspunktes der Kondensatoren C1, C2 beziehungsweise der Dioden D1, D2 bloß durch gezieltes Ansteuern der Schaltelemente Sla..S2b geregelt werden.

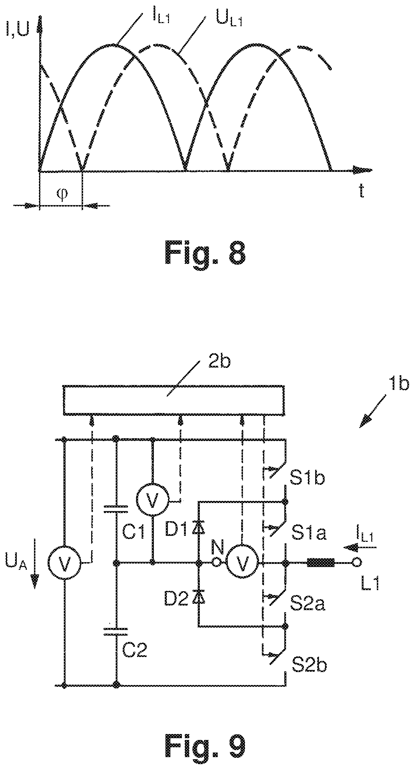

Fig. 8 zeigt nun, wie eine Phasenverschiebung ϕ zwischen einem Eingangsstrom I_{L1} und einer Eingangsspannung U_{L1} vorgegeben werden kann. Dazu wird einfach die Eingangsspannung U_{L1} ermittelt und die Vorgabe für den Eingangsstrom I_{L1} um den gewünschten Phasenwinkel ϕ phasenverschoben. Fig. 9 zeigt dazu einen AC/DC-Spannungswandler 1b beziehungsweise eine Regelung 2b, welche auch die Eingangsspannung U_{L1} erfassen kann.

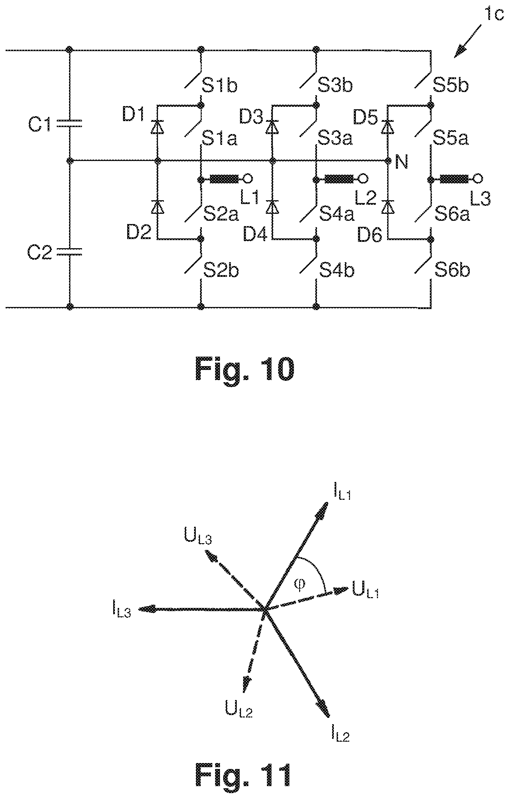

In Fig. 10 ist weiterhin ein AC/DC- Spannungswandler 1c dargestellt, welche im Unterschied zum Spannungswandler 1a aus Fig. 1 nicht nur einen Phasenanschluss L1, sondern drei Phasenanschlüsse L1, L2 und L3 aufweist. Demzufolge ist der AC/DC-Spannungswandler 1c an ein Dreiphasennetz mit oder ohne Nullleiter N anschließbar. Der AC/DC- Spannungswandler 1c umfasst für den dreiphasigen Anschluss zusätzliche Schaltelemente S3a..S6b sowie zusätzliche Dioden D3..D6. Die Regelung des AC/DC-Spannungswandlers 1c erfolgt analog zu der bereits beschriebenen Weise und wird daher nicht im Einzelnen erläutert.

Fig. 11 zeigt nun ein beispielhaftes Zeigerdiagramm der Eingangsströme I_{L1}, I_{L2} und I_{L3} sowie der Eingangsspannungen U_{L1}, U_{L2} und U_{L3}. Gut zu sehen ist darin einerseits, dass die Summe der Eingangsströme I_{L1}, I_{L2} und I_{L3} Null ist und über einen Nullleiter N daher kein Strom fließt beziehungsweise dieser nicht angeschlossen sein muss. Die Erfindung kann somit unter anderem auch dazu dienen, die Eingangsströme I_{L1}, I_{L2} und I_{L3} so zu regeln, dass deren Summe Null ist und der erfindungsgemäße AC/DC-Spannungswandler 1c auch in einem Netz ohne Nullleiter N ohne Einschränkungen betrieben werden kann. Die Erfindung verwirklicht somit eine sogenannte "Null-Vektor-Regelung" (bezogen auf den Nullleiter N). Selbstverständlich kann aber auch jeder beliebige Strom beziehungsweise jede beliebige Stromform im Nullleiter N - sofern dieser angeschlossen ist - erzeugt werden.

Andererseits ist in der Fig. 11 auch gut die Phasenverschiebung ϕ zwischen den Eingangsströmen I_{L1}, I_{L2} und I_{L3} und den Eingangsspannungen U_{L1}, U_{L2} und U_{L3} zu sehen. Die Erfindung kann somit unter anderem als Phasenschieber eingesetzt werden. Im gezeigten Beispiel eilen die Eingangsströme I_{L1}, I_{L2} und I_{L3} den Eingangsspannungen U_{L1}, U_{L2} und U_{L3} vor, der AC/DC-Spannungswandler 1d zeigt also kapazitives Verhalten. Auf diese Weise kann eine induktive Last in einem Stromnetz, beispielsweise elektrische Maschinen in einer Fabrikhalle, kompensiert werden, sodass das Stromnetz im gesamten ohmsches Verhalten zeigt. Sollen kapazitive Lasten kompensiert werden, so ist der Phasenwinkel ϕ entsprechend negativ zu wählen, sodass der AC/DC-Spannungswandler 1d induktives Verhalten zeigt.

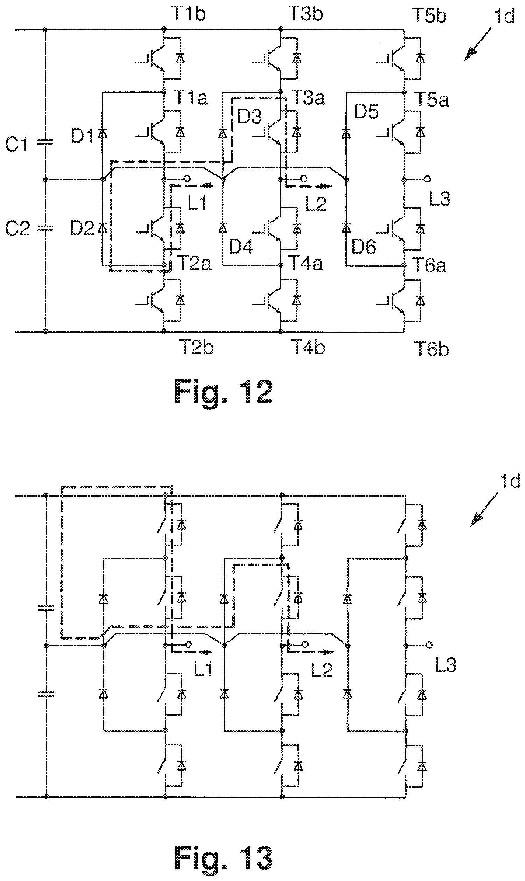

Fig. 12 zeigt nun eine Ausführungsform eines AC/DC-Spannungswandlersld, welcher dem AC/DC-Spannungswandler 1c aus Fig. 11 sehr ähnlich ist. Die Schaltelemente sind hier durch Transistoren Tla..T6b gebildet, konkret durch IGBTs (Insulated Gate Bipolar Transistor). Dabei bildet eine Serienschaltung von n (hier n=4) Schaltelementen T1a..T2b jeweils eine Halbbrücke, wobei der mit dem Anschluss L1 des Wechselspannungseingangs E verbundene Verbindungspunkt zwischen n/2 Schaltelementen Tla..T2b angeordnet ist. Auf diese Weise wird die Spannung über den einzelnen Transistoren Tla..T6b reduziert, sodass auch bei relativ hoher Ausgangsspannung U_{A}, Transistoren mit relativ niedriger maximaler Sperrspannung eingesetzt werden können. In diesem Beispiel ist jedem Transistor T1a..T6b eine Diode antiparallel geschaltet, um den Stromfluss in einer Richtung auch dann zu ermöglichen, wenn der Transistor T1a..T6b geschlossen ist. Werden für die Transistoren T1a..T6b MOSFETs (Metal Oxide Semiconductor Field Effect Transistor) eingesetzt, so können diskrete antiparallel geschaltete Dioden entfallen, da MOSFETs ohnehin Body-Dioden aufweisen. Zudem sind auch IGBTs bekannt, die eine integrierte antiparallele Diode aufweisen.

In der Fig. 12 ist ein möglicher Stromfluss während einer ersten Phase mit einer strichlierten Linie zu einem Zeitpunkt dargestellt, in dem die Eingangsströme I_{L1}, I_{L2} und I_{L3} wie in Fig. 11 dargestellt vorliegen. Das heißt der Strom fließt über den Eingang L1 und über den Ausgang L2. Über L3 fließt zu diesem konkreten Zeitpunkt kein Strom.

In der Fig. 13 ist ein möglicher Stromfluss während einer zweiten Phase mit einer strichlierten Linie wiederum zu einem Zeitpunkt dargestellt, in dem die Eingangsströme I_{L1} I_{L2} und I_{L3} wie in Fig. 11 dargestellt vorliegen. Das heißt der Strom fließt über den Eingang L1 und über den Ausgang L2, nun jedoch über den Kondensator C1.

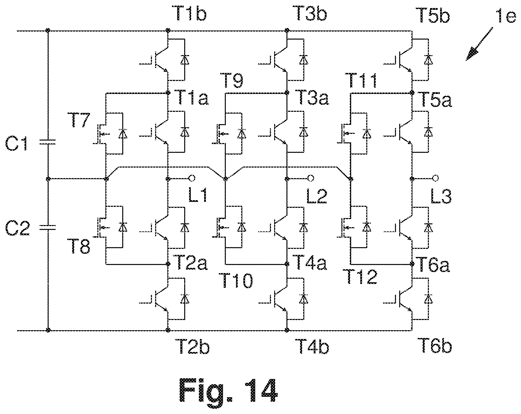

Fig. 14 zeigt nun eine Ausführungsform eines AC/DC-Spannungswandlers le, welcher dem AC/DC-Spannungswandler 1d aus den Figuren 12 und 13 sehr ähnlich ist. Allerdings sind hier auch die Dioden D1..D6 durch IGBTs ersetzt. Die Anzahl unterschiedlicher Bauteile kann somit reduziert werden, wodurch sich eine vereinfachte Herstellung der Schaltung ergibt. Werden MOSFETs eingesetzt, so werden die Dioden D1..D6 vorteilhaft durch die Body-Dioden der MOSFETs gebildet.

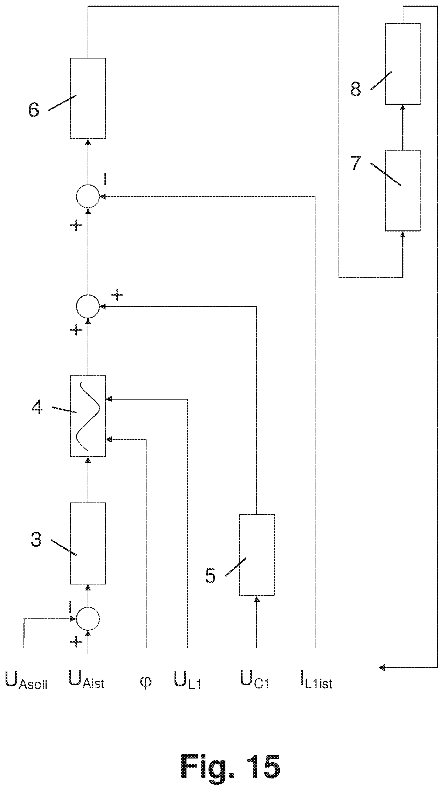

Fig. 15 zeigt ein Blockschaltbild einer beispielhaften, erfindungsgemäßen Regelung. Dabei wird der Sollwert der Ausgangsspannung U_{Asoll} von dessen Istwert U_{Aist} subtrahiert und einem Leistungsregler 3 zugeführt. Dessen Ausgangswert, eine Stromamplitude, wird gemeinsam mit dem Phasenwinkel ϕ und der Eingangsspannung U_{L1} einer Synchronisierung und Sollwertumformung 4 zugeführt. Deren Ausgangssignal wird zum Ausgangssignal eines Nullstromreglers 5, welcher das Potential (hier repräsentiert durch die Spannung U_{C1} am Kondensator C1) am Verbindungspunkt der Kondensatoren C1, C2 als Eingang hat, addiert. Dieses Summensignal stellt den Sollstrom dar, von welchem der Istwert des Eingangsstroms I_{L1ist} subtrahiert wird. Dieses Signal wird in Folge einem Stromregler 6 und dessen Ausgangssignal einer Pulsmustererzeugung 7 zugeführt. Dieses Pulsmuster wirkt, wie bereits zuvor dargestellt wurde, über die Schaltelemente Sla..S6b, T1a..T6b auf die reale Regelstrecke 8, an der wiederum die benötigten Istwerte ermittelt werden können.

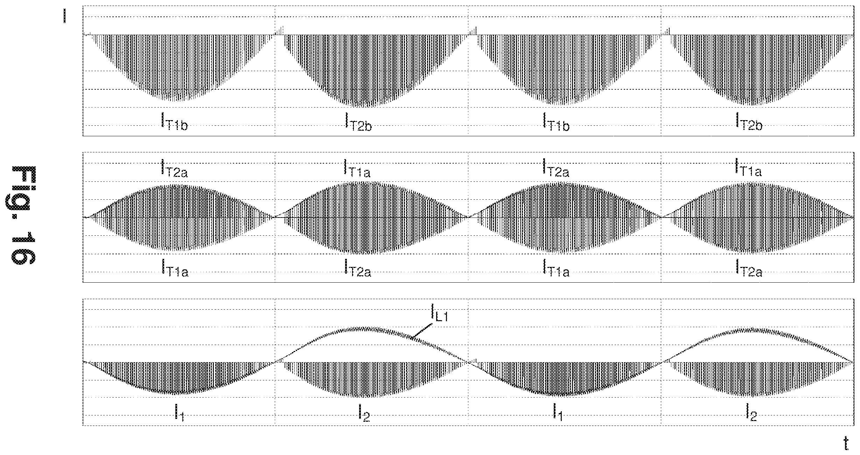

Fig. 16 zeigt den zeitlichen Verlauf ausgewählter Stromverläufe eines real ausgeführten beziehungsweise simulierten AC/DC-Spannungswandlers le. Zu sehen sind die Ströme I_{T1a}, I_{T1b}, I_{T2a} und I_{T2b} durch die Transistoren T1a, T1b, T2a und T2b. Des Weiteren ist der Eingangsstrom I_{L1} sowie der Strom I₁ im oberen und der Strom I₂ im unteren Verbindungszweig zwischen der Serienschaltung der Dioden D1, D2 und der Serienschaltung der Transistoren T1a, T1b, T2a und T2b zu sehen. Dabei ist zu beachten, dass der Maßstab für den Strom I im obersten Diagramm doppelt so groß ist wie in den beiden unteren Diagrammen. Im untersten Diagramm ist am Eingangsstrom I_{L1} gut zu erkennen, dass dieser praktisch sinusförmig ist und nur einen kleinen Strom-Rippel aufweist. Der erfindungsgemäße AC/DC-Spannungswandler la..le kann daher auch sehr gut als PFC (Power Factor Correction) eingesetzt werden.

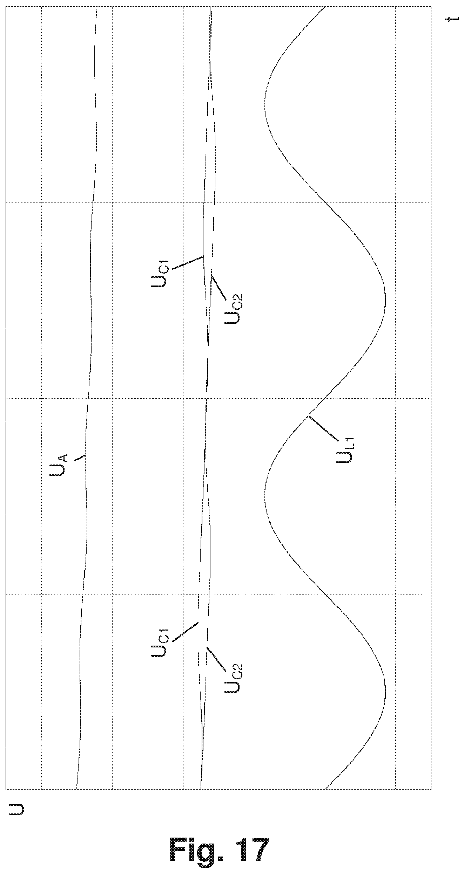

Fig. 17 zeigt ergänzend die Spannungen U_{C1} und U_{C2} in den Kondensatoren C1 und C2, deren Summenspannung, welche gleich der Ausgangsspannung U_{A} ist, sowie die Eingangsspannung U_{L1}. In diesem Diagramm ist gut zu erkennen, dass die Ausgangsspannung U_{A} nur eine sehr kleine Restwelligkeit aufweist.

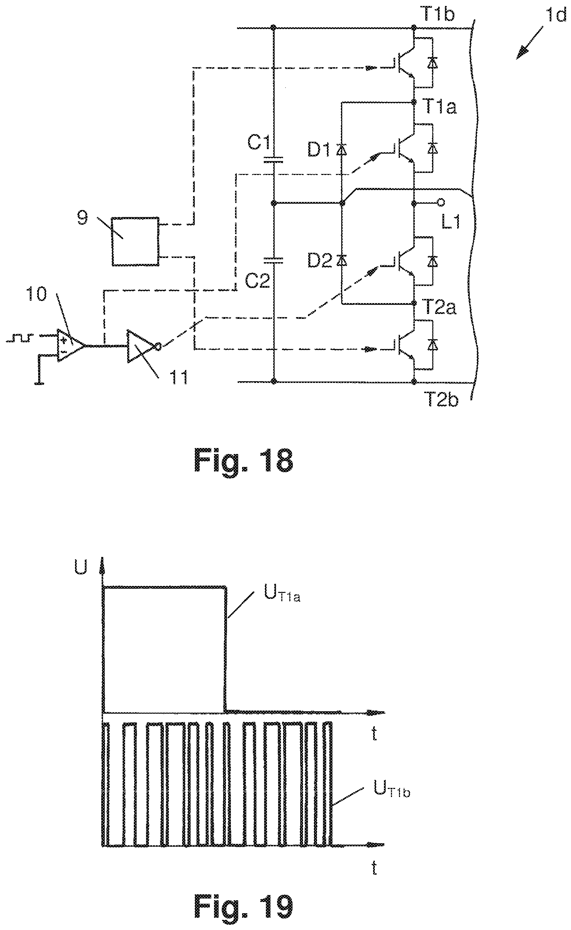

Fig. 18 zeigt nun einen Ausschnitt aus dem AC/DC-Spannungswandler 1d aus Fig. 12 und 13 mit einer speziellen Ansteuerung der Transistoren T1a..T6b am Beispiel der aus den Transistoren Tla..T2b gebildeten Halbbrücke. Dabei werden die äußeren Transistoren T1b und T2b durch einen DSP 9 (Digital Signal Processor) angesteuert, beispielsweise mit eine pulsweitenmodulierten Pulsmuster. Der Transistor T1a wird dagegen mit einem der Netzfrequenz des Eingangsstroms I_{L1} entsprechenden Taktsignal angesteuert, hier über den Operationsverstärker 10. Der Transistor T2a wird mit Hilfe des Inverters 11 gegengleich angesteuert. Durch die logische UND-Verknüpfung der hintereinander geschalteten Transistoren T1a und T1b beziehungsweise T2a und T2b wird das Pulsmuster des DSP 9 nur dann wirksam, wenn auch der betreffende in Serie liegende Transistor T1a beziehungsweise T2a leitend ist.

In Fig. 19 ist ein beispielhafter Verlauf der Steuersignale U_{T1a} und U_{T1b} für die Transistoren T1a und T1b dargestellt. Darin ist gut zu erkennen, dass die Transistoren T1b und T2b mit demselben Pulsmuster U_{T1b} des DSP 9 angesteuert werden können weil die Steuerspannung U_{T1a} für den Transistor T1a und die inverse Steuerspannung für den Transistor T2a bewirken, dass das Pulsmuster U_{T1b} jeweils nur für eine Halbwelle der Eingangsspannung U_{L1} wirksam ist.

Selbstverständlich könnten im gezeigten Beispiel auch die inneren Transistoren T1a und T2a vom DSP 9 und der äußere Transistor T1b vom Operationsverstärker 10 sowie der äußere Transistor T2b vom Inverter 11 angesteuert werden. Denkbar wäre natürlich auch, dass der DSP 9 an einem Ausgang für eine Halbwelle ein Pulsmuster und für die nächste Halbwelle eine logische Null ausgibt, sodass die Transistoren T1a und T1b mit demselben Signal angesteuert werden können. Die Transistoren T2a und T2b können in diesem Fall mit einem äquivalenten Signal an einem zweiten Ausgang des DSP 9 angesteuert werden.

Die Ausführungsbeispiele zeigen mögliche Ausführungsvarianten einer erfindungsgemäßen Regelung beziehungsweise eines erfindungsgemäßen AC/DC-Spannungswandlers 1a..1e, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der der Regelung und des AC/DC-Spannungswandlers la..le dieser bzw. dieser in den Figuren schematisch dargestellt ist und in der Realität daher mehr Bauteile als dargestellt, weniger Bauteile als dargestellt oder auch andere Bauteile umfassen kann.

Die den eigenständigen erfinderischen Lösungen zugrundeliegende Aufgabe kann der Beschreibung entnommen werden.

### Bezugszeichenaufstellung

- la..le: AC/DC-Spannungswandler
- 2a..2b: Regelung
- 3: Leistungsregler
- 4: Synchronisierung und Sollwertumformung
- 5: Nullstromregler
- 6: Stromregler
- 7: Pulsmustererzeugung
- 8: Regelstrecke
- 9: Digitaler Signalprozessor (DSP)
- 10: Operationsverstärker
- 11: Inverter
- A: Ausgang
- C1, C2: Kondensator
- D1..D6: Diode
- E: Eingang
- I: Strom
- I₁, I₂: Ströme im Verbindungszweig
- I_{L1}..I_{L3}: Eingangsstrom, Phasenstrom
- I_{L1ist}: Istwert des Eingangsstroms
- I_{T1a}..I_{T2b}: Transistorströme
- L1..L3: Phasenanschluss
- N: Nullleiteranschluss
- S1a..S6b: Schaltelement
- t: Zeit
- T1a..T6b: Transistor
- T7..T12: Transistor
- U: Spannung
- U_{A}: Ausgangsspannung
- U_{Aist}: Istwert der Ausgangsspannung
- U_{Asoll}: Sollwert der Ausgansspannung
- U_{C1,} U_{C2}: Kondensatorspannung
- U_{L1}..U_{L3}: Eingangsspannung, Phasenspannung
- U_{S1}, U_{S2}: Steuerspannung für Schaltelement
- V: Spannungsmessgerät (Voltmeter)
- ϕ: Phasenwinkel, Phasenverschiebung

## Patentansprüche

1. Verfahren zur Ansteuerung eines AC/DC-Spannungswandlers (1a..1e) mit einem Gleichspannungsausgang (A) zwischen dem wenigstens eine Serienschaltung von zumindest zwei Kondensatoren (C1, C2) und wenigstens eine Serienschaltung von n Schaltelementen (S1a..S6b, T1a..T6b) angeordnet ist, wobei n ≥ 4 gilt, wobei n eine gerade Zahl ist, wobei ein Verbindungspunkt in der Mitte der Serienschaltung der Schaltelemente (Sla..S6b, T1a..T6b) mit einem Anschluss (L1, L2, L3) eines Wechselspannungseingangs (E) verbunden ist, wobei zumindest der Serienschaltung der dem genannten Verbindungspunkt nächst liegenden zwei Schaltelemente (S1a..S6a, T1a..T6a) eine Serienschaltung von zumindest zwei Dioden (D1..D6) antiparallel geschaltet ist und wobei ein Verbindungspunkt der Kondensatoren (C1, C2) mit einem Verbindungspunkt der Dioden (D1..D6) verbunden ist,
**dadurch gekennzeichnet, dass**
- eine Ausgangsspannung (U_{A}) am Gleichspannungsausgang (A) und ein Potential (U_{C1}) des genannten Verbindungspunktes der Kondensatoren (C1, C2) beziehungsweise der Dioden (D1..D6) als Regelgrößen,
- ein Eingangsstrom (I_{L1}, I_{L2}, I_{L3}) am Wechselspannungseingang (E) als Stellgröße und
- die Schaltelemente (Sla..S6b, T1a..T6b) als Stellglied eines Regelkreises vorgesehen sind.

2. Verfahren nach Anspruch 1, **dadurch gekennzeichnet, dass** die Form des Eingangsstroms (I_{L1}, I_{L2}, I_{L3}) vorgegeben wird.

3. Verfahren nach Anspruch 2, **dadurch gekennzeichnet, dass** die Ausgangsspannung (U_{A}) am Gleichspannungsausgang (A) mithilfe einer Amplitude des Eingangsstroms (I_{L1}, I_{L2}, I_{L3}) vorgegebener Form geregelt wird.

4. Verfahren nach Anspruch 3, **dadurch gekennzeichnet, dass** das Potential (U_{C1}) des genannten Verbindungspunktes der Kondensatoren (C1, C2) beziehungsweise der Dioden (D1..D6) mithilfe der Amplitude des Eingangsstroms (I_{L1}, I_{L2}, I_{L3}) vorgegebener Form geregelt wird.

5. Verfahren nach Anspruch 3, **dadurch gekennzeichnet, dass** das Potential (U_{C1}) des genannten Verbindungspunktes der Kondensatoren (C1, C2) beziehungsweise der Dioden (D1..D6) mithilfe eines Impulses geregelt wird, welcher dem Eingangsstroms (I_{L1}, I_{L2}, I_{L3}) vorgegebener Form überlagert wird.

6. Verfahren nach einem der vorgehenden Ansprüche, **dadurch gekennzeichnet, dass** eine Phasenverschiebung (ϕ) zwischen einem Eingangsstrom (I_{L1}, I_{L2}, I_{L3}) und einer Eingangsspannung (U_{L1}, U_{L2}, U_{L3}) vorgegeben wird.

7. Verfahren nach einem der vorgehenden Ansprüche, **dadurch gekennzeichnet, dass** wenigstens zwei Schaltelemente (Sla..S6b, T1a..T6b), welche auf einer Seite des genannten Verbindungspunktes der Schaltelemente (S1a..S6b, T1a..T6b) liegen, unterschiedlich angesteuert werden.

8. Verfahren nach Anspruch 7, **dadurch gekennzeichnet, dass** wenigstens eines der auf einer Seite des genannten Verbindungspunktes liegende Schaltelemente (S1a..S6b, T1a..T6b) mit einem Taktsignal angesteuert wird, welches dieselbe Frequenz aufweist wie eine Eingangsspannung (U_{L1}, U_{L2}, U_{L3}) des Wechselspannungseingangs (E).

9. Verfahren nach Anspruch 7, **dadurch gekennzeichnet, dass** wenigstens eines der auf der anderen Seite des genannten Verbindungspunktes liegende Schaltelemente (S1a..S6b, Tla..T6b) mit einem zum genannten Taktsignal inversen Signal angesteuert wird.

10. Verfahren nach Anspruch 8 oder 9, **dadurch gekennzeichnet, dass** wenigstens eines der Schaltelemente (Sla..S6b, T1a..T6b), welches nicht mit dem Taktsignal oder dem dazu inversen Signal angesteuert wird, mit einem pulsweitenmodulierten Signal angesteuert wird.

11. Regler für einen AC/DC-Spannungswandler (1a.. 1e) mit einem Gleichspannungsausgang (A) zwischen dem wenigstens eine Serienschaltung von zumindest zwei Kondensatoren (C1, C2) und wenigstens eine Serienschaltung von n Schaltelementen (Sl1..S6b, T1a..T6b) angeordnet ist, wobei n ≥ 4 gilt, wobei n eine gerade Zahl ist, wobei ein Verbindungspunkt in der Mitte der Serienschaltung der Schaltelemente (S1a..S6b, T1a..T6b) mit einem Anschluss (L1, L2, L3) eines Wechselspannungseingangs (E) verbunden ist, wobei zumindest der Serienschaltung der dem genannten Verbindungspunkt nächst liegenden zwei Schaltelemente (S1a..S6a, T1a..T6a) eine Serienschaltung von zumindest zwei Dioden (D1..D6) antiparallel geschaltet ist und wobei ein Verbindungspunkt der Kondensatoren (C1, C2) mit einem Verbindungspunkt der Dioden (D1..D6) verbunden ist,
**gekennzeichnet durch**
- jeweils einen Eingang für die Ausgangsspannung (U_{A}) am Gleichspannungsausgang (A) und für ein Potential (U_{C1}) des genannten Verbindungspunktes der Kondensatoren (C1, C2) beziehungsweise der Dioden (D1..D6),
- Ausgänge zur Ansteuerung der Schaltelemente (Sla..S6b, T1a..T6b) und
- Mittel zur Ausführung eines Regelalgorithmus, bei dem die die Ausgangsspannung (U_{A}) und das genannte Potential (U_{C1}) als Regelgrößen, ein Eingangsstrom (I_{L1}, I_{L2}, I_{L3}) am Wechselspannungseingang (E) als Stellgröße und die Schaltelemente (Sla..S6b, T1a..T6b) als Stellglied eines Regelkreises vorgesehen sind.

12. AC/DC-Spannungswandler (1a.. 1e) mit einem Gleichspannungsausgang (A), zwischen dem wenigstens eine Serienschaltung von zumindest zwei Kondensatoren (C1, C2) und wenigstens eine Serienschaltung von n Schaltelementen (Sla..S6b, T1a..T6b) angeordnet ist, wobei n ≥ 4 gilt, wobei n eine gerade Zahl ist, wobei ein Verbindungspunkt in der Mitte der Serienschaltung der Schaltelemente (Sla..S6b, T1a..T6b) mit einem Anschluss (L1, L2, L3) eines Wechselspannungseingangs (E) verbunden ist, wobei zumindest der Serienschaltung der dem genannten Verbindungspunkt nächst liegenden zwei Schaltelemente (S1a..S6a, T1a..T6a) eine Serienschaltung von zumindest zwei Dioden (D1..D6) antiparallel geschaltet ist und wobei ein Verbindungspunkt der Kondensatoren (C1, C2) mit einem Verbindungspunkt der Dioden (D1..D6) verbunden ist, **gekennzeichnet durch** einen Regler nach Anspruch 11,
- dessen Eingang für die Ausgangsspannung (U_{A}) am Gleichspannungsausgang (A) mit eben diesem Gleichspannungsausgang (A),
- dessen Eingang für das Potential (U_{C1}) des genannten Verbindungspunktes der Kondensatoren (C1, C2) beziehungsweise der Dioden (D1..D6) mit eben diesem Verbindungspunkt und
- dessen Ausgänge zur Ansteuerung der Schaltelemente (Sla..S6b, T1a..T6b) mit eben diesen Schaltelementen (Sla..S6b, T1a..T6b) verbunden ist.

13. AC/DC-Spannungswandler (la.. le) nach Anspruch 12, **dadurch gekennzeichnet, dass** der Verbindungspunkt der Kondensatoren (C1, C2) beziehungsweise der Dioden (D1..D6) mit einem Nullleiteranschluss (N) des Wechselspannungseingangs (E) verbunden ist.

14. AC/DC-Spannungswandler (1a.. 1e) nach Anspruch 12 oder 13, **dadurch gekennzeichnet, dass** der Verbindungspunkt der Schaltelemente (S1a..S6b, T1a..T6b) mit einem Phasenanschluss (L1, L2, L3) des Wechselspannungseingangs (E) verbunden ist.

15. AC/DC-Spannungswandler (1a.. 1e) nach einem der Ansprüche 12 bis 14, **dadurch gekennzeichnet, dass** die Schaltelemente (S1a..S6a, T1a..T6b) durch MOSFETs und die Dioden (D1..D6) durch deren Body-Dioden gebildet sind.

## Claims

1. A method for controlling an AC/DC voltage transformer (1a..1e) having a DC voltage output (A) between which at least one series circuit of at least two capacitors (C1, C2) and at least one series circuit of n switching elements (S1a..S6b, T1a..T6b) is arranged, where n ≥ 4, wherein n is an even number, wherein a connecting point in the middle of the series circuit of the switching elements (S1a..S6b, T1a..T6b) is connected to a connection (L1, L2, L3) of an AC voltage input (E), wherein a series circuit of at least two diodes (D1..D6) is connected in an antiparallel arrangement to at least the series circuit of the two switching elements (S1a..S6a, T1a..T6a) lying closest to said connecting point, and wherein a connecting point of the capacitors (C1, C2) is connected to a connecting point of the diodes (D1..D6),
**characterized in that**
- an output voltage (U_{A}) at the DC voltage output (A) and a potential (U_{C1}) of said connecting point of the capacitors (C1, C2) and/or of diodes (D1..D6) are provided as controlled variables,
- an input current (I_{L1}, I_{L2}, I_{L3}) at the AC voltage input (E) is provided as a manipulated variable and
- the switching elements (S1a..S6b, T1a..T6b) are provided as an actuating element of a control loop.

2. The method according to claim 1, **characterized in that** the shape of the input current (I_{L1}, I_{L2}, I_{L3}) is preset.

3. The method according to claim 2, **characterized in that** the output voltage (UA) at the DC voltage output (A) is controlled with the aid of an amplitude of the input current (I_{L1}, I_{L2}, I_{L3}) of preset shape.

4. The method according to claim 3, **characterized in that** the potential (U_{C1}) of said connecting point of the capacitors (C1, C2) and/or of the diodes (D1..D6) is controlled with the aid of the amplitude of the input current (I_{L1}, I_{L2}, I_{L3}) of preset shape.

5. The method according to claim 3, **characterized in that** the potential (UC1) of said connecting point of the capacitors (C1, C2) and/or of the diodes (D1..D6) is controlled with the aid of a pulse which is superimposed on the input current (I_{L1}, I_{L2}, I_{L3}) of preset shape.

6. The method according to one of the preceding claims, **characterized in that** a phase shift (ϕ) between an input current (I_{L1}, I_{L2}, I_{L3}) and an input voltage (U_{L1}, U_{L2}, U_{L3}) is preset.

7. The method according to one of the preceding claims, **characterized in that** at least two switching elements (S1a..S6b, T1a..T6b), which are located on one side of said connecting point of the switching elements (S1a..S6b, T1a..T6b), are actuated differently.

8. The method according to claim 7, **characterized in that** at least one of the switching elements (S1a..S6b, T1a..T6b) located on one side of said connecting point is actuated by a clock signal having the same frequency as an input voltage (U_{L1}, U_{L2}, U_{L3}) of the AC voltage input (E).

9. The method according to claim 7, **characterized in that** at least one of the switching elements (S1a..S6b, T1a..T6b) located on the other side of said connecting point is actuated by a signal inverse to said clock signal.

10. The method according to claim 8 or 9, **characterized in that** at least one of the switching elements (S1a..S6b, T1a..T6b) which is not actuated by the clock signal or the signal inverse thereto is actuated by a pulse width modulated signal.

11. A controller for an AC/DC voltage transformer (1a.. 1e) having a DC voltage output (A) between which at least one series circuit of at least two capacitors (C1, C2) and at least one series circuit of n switching elements (S1a..S6b, T1a..T6b) is arranged, where n ≥ 4, wherein n is an even number, wherein a connecting point in the middle of the series circuit of the switching elements (S1a..S6b, T1a..T6b) is connected to a connection (L1, L2, L3) of an AC voltage input (E), wherein a series circuit of at least two diodes (D1..D6) is connected in an antiparallel arrangement to at least the series circuit of the two switching elements (S1a..S6a, T1a..T6a) lying closest to said connecting point, and wherein a connecting point of the capacitors (C1, C2) is connected to a connecting point of the diodes (D1..D6),
**characterized by**
- one input for the output voltage (U_{A}) each, at the DC voltage output (A) and for a potential (U_{C1}) of said connecting point of the capacitors (C1, C2) and/or of the diodes (D1..D6),
- outputs for actuating the switching elements (S1a..S6b, T1a..T6b) and
- means for running a control algorithm, in which the output voltage (U_{A}) and said potential (U_{C1}) are provided as controlled variables, an input current (I_{L1}, I_{L2}, I_{L3}) at the AC voltage input (E) is provided as a manipulated variable and the switching elements (S1a..S6b, T1a..T6b) are provided as an actuating element of a control loop.

12. An AC/DC voltage transformer (1a.. 1e) having a DC voltage output (A) between which at least one series circuit of at least two capacitors (C1, C2) and at least one series circuit of n switching elements (S1a..S6b, T1a..T6b) is arranged, where n ≥ 4, wherein n is an even number, wherein a connecting point in the middle of the series circuit of the switching elements (S1a..S6b, T1a..T6b) is connected to a connection (L1, L2, L3) of an AC voltage input (E), wherein a series circuit of at least two diodes (D1..D6) is connected in an antiparallel arrangement to at least the series circuit of the two switching elements (S1a..S6a, T1a..T6a) lying closest to said connecting point, and wherein a connecting point of the capacitors (C1, C2) is connected to a connecting point of the diodes (D1..D6),
**characterized by**
a controller according to claim 11,
- whose input for output voltage (U_{A}) at the DC voltage output (A) is connected to said DC voltage output (A),
- whose input for the potential (U_{C1}) of said connecting point of the capacitors (C1, C2) and/or of the diodes (D1..D6) is connected to said connecting point and
- whose outputs for actuating the switching elements (S1a..S6b, T1a..T6b) are connected to said switching elements (S1a..S6b, T1a..T6b).

13. The AC/DC voltage transformer (1a.. 1e) according to claim 12, **characterized in that** the connecting point of the capacitors (C1, C2) and/or of the diodes (D1..D6) is connected to a neutral terminal (N) of the AC voltage input (E).

14. The AC/DC voltage transformer (1a.. 1e) according to claim 12 or 13, **characterized in that** the connecting point of the switching elements (S1a..S6b, T1a..T6b) is connected to a phase connection (L1, L2, L3) of the AC voltage input (E).

15. The AC/DC voltage transformer (1a.. 1e) according to one of claims 12 to 14, **characterized in that** the switching elements (S1a..S6a, T1a..T6b) are formed by MOSFETs and the diodes (D1..D6) are formed by their body diodes.

## Revendications

1. Procédé de contrôle d'un convertisseur de tension AC/DC (1a..1e) avec une sortie de tension continue (A) entre laquelle au moins un branchement en série d'au moins deux condensateurs (C1, C2) et au moins un branchement en série de n éléments de commutation (Sla..S6b, T1a..T6b) est disposé, dans lequel n ≥ 4, dans lequel n est un chiffre pair, dans lequel un point de liaison au centre du branchement en série des éléments de commutation (Sla..S6b, T1a..T6b) est relié avec un raccordement (L1, L2, L3) d'une entrée de tension alternative (E), dans lequel, au moins au branchement en série des deux éléments de commutation (Sla..S6b, T1a..T6b) les plus proches du point de liaison mentionné, est branché, de manière anti-parallèle, un branchement en série d'au moins deux diodes (D1..D6) et dans lequel un point de liaison des condensateurs (C1, C2) est relié avec un point de liaison des diodes (D1..D6),
**caractérisé en ce que**
- une tension de sortie (U_{A}) au niveau de la sortie de tension continue (A) et un potentiel (U_{C1}) du point de liaison mentionné des condensateurs (C1, C2), respectivement des diodes (D1..D6) sont prévues en tant que grandeurs de régulation,
- un courant d'entrée (I_{L1}, I_{L2}, I_{L3}) au niveau de l'entrée de tension alternative (E) est prévu en tant que grandeur de réglage et
- les éléments de commutation (Sla..S6b, T1a..T6b) sont prévus en tant qu'organes de réglage d'un circuit de régulation.

2. Procédé selon la revendication 1, **caractérisé en ce que** la forme du courant d'entrée (I_{L1}, I_{L2}, I_{L3}) est prédéterminée.

3. Procédé selon la revendication 2, **caractérisé en ce que** la tension de sortie (U_{A}) au niveau de la sortie de tension continue (A) est régulée à l'aide d'une amplitude du courant d'entrée (I_{L1}, I_{L2}, I_{L3}) de forme prédéterminée.

4. Procédé selon la revendication 3, **caractérisé en ce que** le potentiel (U_{C1}) du point de liaison mentionné des condensateurs (C₁, C2) respectivement des diodes (D1..D6) est régulé à l'aide de l'amplitude du courant d'entrée (I_{L1}, I_{L2}, I_{L3}) de forme prédéterminée.

5. Procédé selon la revendication 3, **caractérisé en ce que** le potentiel (U_{C1}) du point de liaison mentionné des condensateurs (C1, C2) respectivement des diodes (D1..D6) est régulé à l'aide d'une impulsion qui se superpose au courant d'entrée (I_{L1}, I_{L2}, I_{L3}) de forme prédéterminée.

6. Procédé selon l'une des revendications précédentes, **caractérisé en ce qu'**un décalage de phase (ϕ) entre un courant d'entrée (I_{L1}, I_{L2}, I_{L3}) et une tension d'entrée (U_{L1}, U_{L2}, U_{L3}) est prédéterminé.

7. Procédé selon l'une des revendications précédentes, **caractérisé en ce qu'**au moins deux éléments de commutation (Sla..S6b, T1a..T6b), qui se trouvent sur un côté du point de liaison des éléments de commutation (Sla..S6b, T1a..T6b), sont contrôlés différemment.

8. Procédé selon la revendication 7, **caractérisé en ce qu'**au moins un des éléments de commutation (Sla..S6b, T1a..T6b) qui se trouvent sur un côté du point de liaison mentionné est contrôlé avec un signal de cadencement qui présente la même fréquence qu'une tension d'entrée (U_{L1}, U_{L2}, U_{L3}) de l'entrée de tension alternative (E).

9. Procédé selon la revendication 7, **caractérisé en ce qu'**au moins un des éléments de commutation (Sla..S6b, T1a..T6b) qui se trouvent de l'autre côté du point de liaison mentionné est contrôlé avec un signal inverse du signal de cadencement mentionné.

10. Procédé selon la revendication 8 ou 9, **caractérisé en ce qu'**au moins un des éléments de commutation (Sla..S6b, T1a..T6b) qui n'est pas contrôlé avec le signal de cadencement ou le signal inverse de celui-ci est contrôlé avec un signal modulé par largeur d'impulsion.

11. Régulateur pour un convertisseur de tension AC/DC (1a..1e) avec une sortie de tension continue (A) entre laquelle au moins un branchement en série d'au moins deux condensateurs (C1, C2) et au moins un branchement en série de n éléments de commutation (Sla..S6b, T1a..T6b) est disposé, dans lequel n ≥ 4, dans lequel n est un chiffre pair, dans lequel un point de liaison au centre du branchement en série des éléments de commutation (S1a..S6b, T1a..T6b) est relié avec un raccordement (L1, L2, L3) d'une entrée de tension alternative (E), dans lequel, au moins au branchement en série des deux éléments de commutation (S1a..S6b, T1a..T6b) les plus proches du point de liaison mentionné, est branché, de manière anti-parallèle, un branchement en série d'au moins deux diodes (D1..D6) et dans lequel un point de liaison des condensateurs (C1, C2) est relié avec un point de liaison des diodes (D1..D6),
**caractérisé par**
- une entrée pour la tension de sortie (U_{A}) au niveau de la sortie de tension continue (A) et une entrée pour un potentiel (U_{C1}) du point de liaison mentionné des condensateurs (C1, C2) respectivement des diodes (D1..D6),
- des sorties pour le contrôle des éléments de commutation (Sla..S6b, T1a..T6b) et
- des moyens pour l'exécution d'un algorithme de régulation, dans lequel la tension de sortie (U_{A}) et le potentiel (U_{C1}) mentionné sont prévus en tant que grandeurs de régulation, un courant d'entrée (I_{L1}, I_{L2}, I_{L3}) au niveau de l'entrée de tension alternative (E) est prévu en tant que grandeur de réglage et les éléments de commutation (S1a..S6b, T1a..T6b) sont prévus en tant qu'organe de réglage d'un circuit de régulation.

12. Convertisseur de tension AC/DC (1a..1e) avec une sortie de tension continue (A) entre laquelle entre laquelle au moins un branchement en série d'au moins deux condensateurs (C1, C2) et au moins un branchement en série de n éléments de commutation (Sla..S6b, T1a..T6b) est disposé, dans lequel n ≥ 4, dans lequel n est un chiffre pair, dans lequel un point de liaison au centre du branchement en série des éléments de commutation (S1a..S6b, T1a..T6b) est relié avec un raccordement (L1, L2, L3) d'une entrée de tension alternative (E), dans lequel, au moins au branchement en série des deux éléments de commutation (S1a..S6b, T1a..T6b) les plus proches du point de liaison mentionné, est branché, de manière anti-parallèle, un branchement en série d'au moins deux diodes (D1..D6) et dans lequel un point de liaison des condensateurs (C1, C2) est relié avec un point de liaison des diodes (D1..D6),
**caractérisé par**
un régulateur selon la revendication 11
- dont l'entrée pour la tension de sortie (U_{A}) est reliée au niveau de la sortie de tension continue (A) avec cette sortie de tension continue (A),
- dont l'entrée pour le potentiel (U_{C1}) du point de liaison mentionné des condensateurs (C1, C2) respectivement des diodes (D1..D6) est relié avec ce point de liaison et
- dont les sorties pour le contrôle des éléments de commutation (S 1a..S6b, Tla..T6b) sont reliées avec ces éléments de commutation (S1a..S6b, T1a..T6b).

13. Convertisseur de tension AC/DC (1a..1e) selon la revendication 12, **caractérisé en ce que** le point de liaison des condensateurs (C1, C2) respectivement des diodes (D1..D6) est relié avec un raccordement au neutre (N) de l'entrée de tension alternative (E).

14. Convertisseur de tension AC/DC (1a.. 1e) selon la revendication 12 ou 13, **caractérisé en ce que** le point de liaison des éléments de commutation (S1a..S6b, T1a..T6b) est relié avec un raccordement de phase (L1, L2, L3) de l'entrée de tension alternative (E).

15. Convertisseur de tension AC/DC (1a..1e) selon l'une des revendications 12 à 14, **caractérisé en ce que** les éléments de commutation (S1a..S6b, T1a..T6b) sont constitués de MOSFET et les diodes (D1..D6) sont constituées de diodes de corps.
